# EUROPÄISCHE PATENTSCHRIFT

(11) **EP 1 463 421 B1**
(45) Veröffentlichungstag und Bekanntmachung des Hinweises auf die Patenterteilung: **05.04.2006**
(21) Anmeldenummer: 02791706.1
(22) Anmeldetag: 23.11.2002
(51) Int. Cl.: A24C 5/34

(54) **EINRICHTUNG UND SYSTEM ZUM MESSEN VON EIGENSCHAFTEN VON MULTISEGMENTFILTERN SOWIE VERFAHREN HIERZU**
DEVICE AND SYSTEM FOR MEASURING THE PROPERTIES OF MULTI-SEGMENTED FILTERS AND CORRESPONDING METHOD
DISPOSITIF ET SYSTEME POUR MESURER DES PROPRIETES DE FILTRES A SEGMENTS MULTIPLES ET PROCEDE CORRESPONDANT

(30) Priorität: 27.12.2001 DE 10163761
(43) Veröffentlichungstag der Anmeldung: 06.10.2004
(73) Patentinhaber: Hauni Maschinenbau AG, 21033 Hamburg (DE)
(72) Erfinder: SCHRÖDER, Dierk, 22399 Hamburg (DE)
(74) Vertreter: Seemann, Ralph
(86) Internationale Anmeldenummer: PCT/EP2002/013186
(87) Internationale Veröffentlichungsnummer: WO 2003/055338

(56) Entgegenhaltungen:
- EP-A2- 0 630 586
- EP-A2- 0 656 181
- EP-A2- 0 910 962
- WO-A2-01/89329
- DE-A1- 19 921 721
- GB-A- 807 785
- GB-A- 2 060 874
- US-A- 3 310 682
- US-A- 4 001 579
- US-A- 4 805 641
- US-A- 5 060 664
- US-A- 5 228 462
- US-A- 5 432 600
- US-A- 5 588 068
- US-A1- 2001 001 390

## Beschreibung

Die Erfindung betrifft eine Einrichtung zum Messen von Eigenschaften von Multisegmentfiltern der tabakverarbeitenden Industrie im Durchstrahlverfahren, wobei eine Beleuchtungsvorrichtung und ein Strahlungsempfänger vorgesehen sind, wobei mittels der Beleuchtungsvorrichtung eine im wesentlichen längsaxial gleichmäßige Bestrahlung eines Multisegmentfilters ermöglicht ist.

Die Erfindung betrifft ferner ein System zum Messen von Eigenschaften von stabförmigen Artikeln oder von Bestandteilen von stabförmigen Artikeln der tabakverarbeitenden Industrie, die nachfolgend zu einem stabförmigen Artikel zusammenfügbar sind, insbesondere von Multisegmentfiltern und/oder von mit Multisegmentfiltern versehene Filterzigaretten, wobei eine erste Meßeinrichtung vorgesehen ist, mittels der die Artikel oder Bestandteile der Artikel mit einem Reflektionsverfahren meßbar sind.

Schließlich betrifft die Erfindung ein Verfahren zur Qualitätssicherung von Filterzigaretten mit Multisegmentfiltern.

Bei der Herstellung von Filterzigaretten mit Multisegmentfiltern ist die Qualitätssicherung dieser ein wesentlicher Aspekt.

Aus der DE-PS 1 188 493, die der US-PS 3,040,179 entspricht, ist eine Meßvorrichtung bekannt, mittels der in einem Durchlichtverfahren gemessen wird, ob Eilterstücke den richtigen Abstand voneinander aufweisen. Hierzu wird von einer Lichtquelle, die in einer Fördertrommel sich befindet, Licht nach außerhalb der Fördertrommel geleitet und von entsprechenden Empfängern aufgenommen. Bei zu eng aneinander liegenden Filterstücken kommt weniger Licht zu den Empfängern und bei zu weit auseinander liegenden Filterstücken kommt mehr Licht zu den Empfängern, so daß eine Entfernungsmessung der' Filterelemente ermöglicht ist.

Aus der DE-AS 1 532 119 ist auch eine Vorrichtung zur Prüfung von Filtern bekannt, bei der in einem Durchlichtverfahren Licht von innerhalb einer Fördertrommel durch die Filterelemente geleitet wird, um in einer Meßeinrichtung aufgenommen zu werden.

Die heutigen gewünschten Multisegmentfilter bzw. Mehrfachfilter weisen allerdings deutlich kompliziertere Filterstrukturen auf, so daß eine, wie in den vorgenannten Druckschriften relativ ungenaue Messung für die Qualitätssicherung nicht ausreichend ist.

Es ist demnach Aufgabe der vorliegenden Erfindung, eine Meßeinrichtung, ein Meßsystem und ein Verfahren zur Qualitätssicherung von Filterzigaretten mit Multisegmentfiltern anzugeben, das verläßlich und mit einer relativ hohen Genauigkeit Aussagen über eine ausreichende Qualität der Filterzigaretten und der entsprechenden Multisegmentfilter ermöglicht.

Gelöst wird diese Aufgabe durch eine Einrichtung zum Messen von Eigenschaften von Multisegmentfilter der tabakverarbeitenden Industrie im Durchlichtverfahren, wobei eine Beleuchtungsvorrichtung und ein Strahlungsempfänger vorgesehen ist, wobei mittels der Beleuchtungsvorrichtung eine im wesentlichen längsaxial gleichmäßige Bestrahlung eines Multisegmentfilters ermöglicht ist, die dadurch weitergebildet ist, daß der Strahlungsempfänger innerhalb eines Förderelements, das zum Fördern wenigstens von Multisegmentfiltern vorgesehen ist, angeordnet ist.

Durch die erfindungsgemäße Maßnahme ist es möglich, mit weniger Streulicht entsprechende Messungen durchführen zu können, so daß das Ergebnis der Messungen verbessert ist. Ferner ist es mit der erfindungsgemäßen Einrichtung möglich, eine raumaufgelöste Messung durchzuführen, mittels der genauere Aussagen über die Position bzw. das Vorhandensein von Filterelementen ermöglicht ist.

Wenn als Beieuchtüngsvorrichtung eine längsaxial zu einer in dem Förderelement angeordneten Aufnahme angeordnete Mehrzahl von Strahlungsquellen vorgesehen ist, ist eine sehr gleichmäßige Ausstrahlung der zu messenden Teile bzw. Abschnitte der Filterzigaretten bzw. der MultisegmentFilter möglich. Wenn vorzugsweise die Strahlungsquellen Leuchtdioden sind, ist eine besonders kostengünstige und langlebige Strahlungsquelle bzw. Beleuchtung gegeben.

Als Strahlungsempfänger ist vorzugsweise wenigstens ein insbesondere zu einer in dem Förderelement angeordneten Aufnahme längsaxial ausgedehntes Empfangselement oder eine zu einer in dem Förderelement angeordneten Aufnahme längsaxial angeordnete Mehrzahl von Empfangselementen vorgesehen.

In einer vorzugsweisen Ausgestaltung der Erfindung findet mittels eines längsaxial ausgedehnten Empfangselements vorzugsweise eine Zeilenkamera, umfassend ein CCD (von charged coupled device bzw. eine ladungsgekoppelte Schaltung) Verwendung. Hierzu wird bspw. auf die DE 36 28 088 C2 verwiesen, in der entsprechende CCD's beschrieben sind. Vorzugsweise umfassen die Empfangselemente Photodioden. Durch diese vorzugsweise Ausgestaltung der Erfindung ist eine besonders kostengünstige und langlebige Realisierung möglich.

Die Aufgabe wird ferner durch ein System zum Messen von Eigenschaften von stabförmigen Artikeln oder von Bestandteilen von stabförmigen Artikeln der tabakverarbeitenden Industrie, die nachfolgend zu einem stabförmigen Artikel zusammenfügbar sind, insbesondere von Multisegmentfiltern und/oder von mit Multisegmentfilter versehenen Filterzigaretten, gelöst, wobei eine erste Meßeinrichtung vorgesehen ist, mittels der die Artikel oder Bestandteile der Artikel mit einem Reflektionsverfahren meßbar sind, das dadurch weitergebildet ist, daß eine zweite Meßeinrichtung vorgesehen ist, mittels der die Artikel oder Bestandteile der Artikel in einem Durchstrahlverfahren meßbar sind.

Durch diese Lösung der Aufgabe wird eine sehr viel genauere Messung der Eigenschaften der stabförmigen Artikel bzw. der Bestandteile der stabförmigen Artikel ermöglicht, da zwei unterschiedliche Meßverfahren bzw. Meßmethoden verknüpft werden, so daß Ungenauigkeiten bei dem einen Meßverfahren durch das andere Meßverfahren kompensiert werden können.

Vorzugsweise ist die zweite Meßeinrichtung eine erfindungsgemäße Meßeinrichtung, wie vorstehend beschrieben wurde.

Wenn ferner vorzugsweise eine dritte Meßeinrichtung vorgesehen ist, mittels der die Artikel oder Bestandteile der Artikel mit einem Reflektionsverfahren meßbar sind, entgehen der Qualitätskontrolle im wesentlichen keine fehlerhaften Zigaretten mehr.

In einer Ausführungsform der Erfindung sind die Meßeinrichtungen in und/oder an einer Filteransetzmaschine angeordnet. Wenn die erste Meßeinrichtung in einem Bereich angeordnet ist, der in einem Produktionsprozeß der stabförmigen Artikel stromabwärts einer die Bestandteile der Artikel zusammenstellenden Station liegt, also bspw. vor einer Belagwickelrollung, ist es auf besonders einfache und elegante Weise möglich, zum einen die Vollzähligkeit der Filterbestandteile als auch die Position der Filterbestandteile und die Länge der einzelnen Bestandteile festzustellen. Zum Teil sind auch Dichteabweichungen einzelner Filterbestandteile meßbar.

Vorzugsweise ist die erste Meßeinrichtung an und/oder in einer stromabwärts einer die Bestandteile zusammenstellenden ersten Trommel angeordneten Obergabetrommel angeordnet.

Wenn die zweite und/oder dritte Meßeinrichtung in einem Bereich angeordnet ist, der in einem Produktionsprozeß der stabförmigen Artikel stromabwärts einer Station zum wenigstens teilweise Umhüllen der Artikel mit einem Belagpapier liegt, kann zum einen die Position der Belagpapierkante als auch der Aufdruck auf einem Belagpapier durch bspw. die dritte Meßeinrichtung erfaßt werden und mittels der zweiten Meßeinrichtung Lücken zwischen Filterbestandteilen, Fehlen der Filterbestandteile und auch Dichteabweichungen einzelner Filterbestandteile festgestellt werden.

Die Stationen umfassen vorzugsweise wenigstens teilweise Trommeln bzw. Fördertrommeln.

In einer bevorzugten Ausführungsform der Erfindung umfaßt die erste und/oder dritte Meßeinrichtung eine Beleuchtungsvorrichtung, mittels der die stabförmigen Artikel oder Bestandteile von stabförmigen Artikeln im wesentlichen in einem Meßbereich bestrahlbar sind, wobei die erste und/oder dritte Meßeinrichtung einen Strahlungsempfänger umfaßt, der die von den Artikeln oder den Bestandteilen reflektierte Strahlung empfängt. Ein kostengünstiges und mit hoher Lebensdauer versehenes Meßsystem ist dann erreichbar, wenn der Strahlungsempfänger eine Mehrzahl von Empfängern ist, die in einer Reihe angeordnet sind. Eine besonders genaue Positionsangabe von Filterelementen bzw. Bestandteilen der Filterzigaretten ist dann gegeben, wenn der Strahlungsempfänger ein in wenigstens einer Richtung ausgedehnter positionssensitiver Empfänger ist, und insbesondere ein CCD umfaßt. Hierzu sei auf die Offenbarung der DE 36 28 088 C2 verwiesen, die zur optischen Überprüfung der Oberfläche von stabförmigen Rauchartikein und/oder Filterstäben für die Tabakindustrie eine Zeilenkameratechnik mit CCD's verwendet, um umwickelte Zigaretten zu überprüfen.

Vorzugsweise ist eine Filteransetzmaschine mit wenigstens einer erfindungsgemäßen Meßeinrichtung wie vorstehend beschrieben und/oder einem erfindungsgemäßen Meßsystem wie vorstehend beschrieben, versehen.

Die Erfinding betrifft ferner ein Verfahren zur Qualitätssicherung von Filterzigaretten mit Multisegmentfiltern, wobei in einer ersten Meßeinrichtung mittels eines Reflektionsverfahrens die von den Filterbestandteilen der Multisegmentfilter reflektierte Strahlung mit ersten Sollwerten verglichen wird, wobei bei einer über einen ersten vorgebbaren Toleranzbereich hinausgehenden Abweichung die Filterzigarette oder die Bestandteile der Filterzigarette ausgeworfen werden.

Im Rahmen dieser Erfindung bedeutet der Begriff "ausgeworfen werden" insbesondere auch von der Weiterverarbeitung ausgeschlossen werden. Durch das erfindungsgemäße Verfahren ist auf einfache Art und Weise eine Qualitätssicherung von Filterzigaretten ermöglicht.

Eine erhöhte Genauigkeit ist erfindungsgemäß gegeben, wenn in einer zweiten Meßeinrichtung mittels eines Durchstrahlverfahrens die von den Filterbestandteilen der Multisegmentfilter und einem sich um diese sich befindenden Belagpapier hindurchgelassene Strahlung mit zweiten Sollwerten verglichen wird, wobei bei einer über einem zweiten vorgebbaren Toleranzbereich hinausgehende Abweichung die Filterzigarette ausgeworfen wird. Als Filterbestandteil wird im Rahmen der Erfindung auch eine Lücke verstanden.

Eine noch genauere und verbesserte Qualitätssicherung ist dann gegeben, wenn in einer dritten Meßeinrichtung mittels eines Reflektionsverfahrens die von einem Belagpapier, das um die Multisegmentfilter herumgewikkelt ist, reflektierte Strahlung mit dritten Sollwerten verglichen wird, wobei bei einer über einen dritten vorgebbaren Toleranzbereich hinausgehenden Abweichung die Filterzigarette ausgeworfen wird.

Im folgenden wird ohne Beschränkung des allgemeinen Erfindungsgedankens anhand von Ausführungsbeispielen unter Bezugnahme auf die Zeichnungen die Erfindung beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Seitenansicht einer Filteransetzmaschine,
- Fig. 2: schematisch eine Querschnittsdarstellung eines Teils einer Doppelfilterzigarette,
- Fig. 3: schematisch eine Seitenansicht einer erfindungsgemäBen Meßeinrichtung,
- Fig. 4: schematisch ein Meßergebnis, das mittels einer erfindungsgemäßen Meßeinrichtung der Fig. 3 erzielt wurde,
- Fig. 5: schematisch in einer Querschnittsdarstellung eine zweite erfindungsgemäße Meßeinrichtung, und
- Fig. 6: schematisch ein Meßergebnis, das mittels der Meßeinrichtung gem. Fig. 5 erzielt wurde.

In den folgenden Figuren sind gleiche Elemente mit denselben Bezugsziffern versehen, so daß von einer erneuten Vorstellung jeweils abgesehen wird.

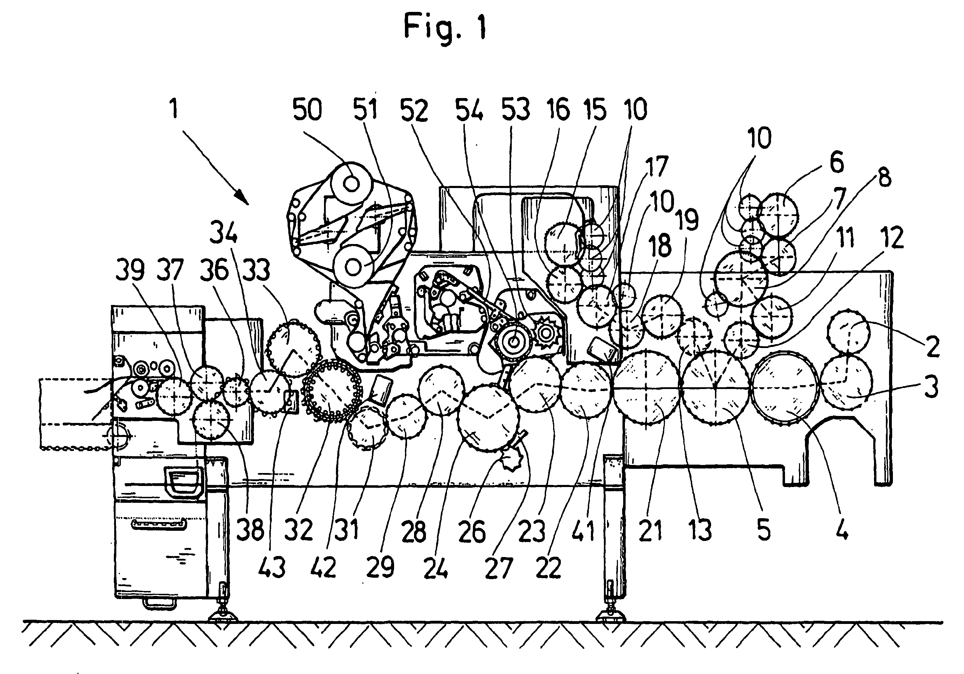

Fig. 1 zeigt in einer schematischen Seitenansicht eine Filteransetzmaschine in wesentlichen Teilen. Die Filteransetzmaschine bspw. vom Typ MAX der Anmelderin umfaßt eine Obergabetrommel 2, auf der von einer Zigarettenherstellmaschine produzierte Zigaretten doppelter Gebrauchslänge übergeben werden. Als nächstes werden die Zigaretten doppelter Gebrauchslänge einer Tabakstockschneidtrommel 3 zugeführt, die die Tabakstöcke in zwei Tabakstöcke bzw. Zigaretten einfacher Gebrauchslänge schneidet. Nach dem Schneiden des Tabakstocks werden die Tabakstöcke einer Spreiztrommel 4 zugeführt, mittels der Tabakstöcke derart auseinandergespreizt werden, daß Filterelemente dazwischen Platz finden. Die derart gespreizten Tabakstöcke bzw. Zigaretten werden einer Zuführtrommel 5 zugeführt.

Der Zufördertrommel 5 werden auch Filterelemente zugeführt und zwar werden diese in eine Position zwischen die Tabakstöcke auf die Zufördertrommel 5 in die entsprechenden Aufnahmen der Zufördertrommel 5 eingelegt. In diesem Ausführungsbeispiel liegt in der Aufnahme der Zufördertrommel 5 zum Zeitpunkt des Einlegens der Filterelemente aus der Trommel 12 mittig ein Filterelement, das von der Trommel 13 eingelegt wurde. Nach dem Einlegen der Filterelemente durch die Trommel 12 in eine Aufnahme der Trommel 5 außen um das dort schon vorhandene Filterelement, werden die Tabakstöcke außen in die Aufnahmen mittels der Trommel 4 eingelegt.

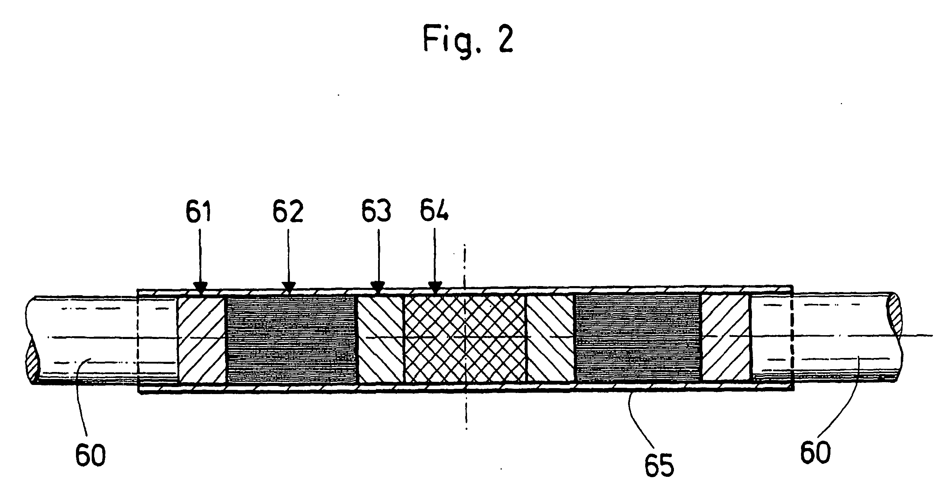

Vor Einlegen der Filterelemente aus der Trommel 12 in die Trommel 5 werden zunächst, was in der Fig. 1 nicht dargestellt ist, mittels einer Schneid- und Entnahmetrommel 6 Filterelemente aus einem Filterelementvorrat entnommen. Bezüglich der Entnahme von Filterelementen aus einem Filterelementvorrat wird auf die DE 25 05 998 C2, die der US 40 20 973 entspricht, verwiesen. Es kann sich hierbei bspw. um Mehrfach-Filterelemente handeln, die die Bestandteile 61, 62 und 63, die in Fig. 2 dargestellt sind, in 12-facher Gebrauchslänge aufweisen. Auf der Schneidtrommel 6 werden diese zunächst zweimal mittels Kreismesser 10 in Multifiltersegmente 4-facher Gebrauchslänge geschnitten. In der Staffeltrommel 7 werden die Multifiltersegmente gestaffelt, um diese dann in der Schiebe- und Schneidtrommel 8 zunächst queraxial fluchtend auszurichten und dann erneut mit einem Kreismesser 10 in Multisegmentfilterabschnitte zweifacher Gebrauchslänge zu schneiden. Anschließend werden diese Filterelemente auf der Schiebe- und Schneidtrommel 8 erneut ausgerichtet, um erneut durch ein Kreismesser 10 in Multifiltersegmente einfacher Gebrauchslänge geschnitten zu werden. Diese werden auf eine Schiebetrommel 11 übergeben und mittels einer Beschleunigertrommel 12 auf die Zuführtrommel 5 übergeben, so daß die Multisegmentfilterelemente einfacher Gebrauchslänge nach Übergabe der Tabakstöcke innenliegend an die Tabakstöcke angrenzen.

Ein weiteres Filterelement 12-facher Gebrauchslänge wird mittels der Schneidtrommel bzw. Schneid-/Entnahmetrommel 15 in bekannter Weise von einem Filtervorrat entnommen (siehe wie oben schon die DE 25 05 998 C2, die der US 40 20 973 entspricht). Auf der Schneidtrommel 15 werden diese Filterabschnitte zweifach durch Kreismesser 10 geschnitten, um auf eine Staffeltrommel 16 übergeben zu werden. Die Filtersegmente werden dann, nachdem sie gestaffelt wurden, auf eine Schiebe- und Schneidtrommel 17 übergeben, wo diese queraxial fluchtend ausgerichtet und zweimal geschnitten werden, so daß Filterelemente einfacher Gebrauchslänge entstehen. Anschließend werden die Filterelemente einfacher Gebrauchslänge in einer Staffeltrommel 18 gestaffelt, um einer Schiebetrommel 19 übergeben zu werden, in der diese längsaxial fluchtend zusammengeschoben werden. Eine weitere Beschleunigertrommel 13 dient dazu, diese Filterelemente in die Mitte der jeweiligen Aufnahmen der Zuführtrommel 5 einzulegen. In diesem Ausführungsbeispiel werden zunächst die zuletzt genannten Filterelemente einfacher Gebrauchslänge in die Mitte der Aufnahmen der Zufördertrommel 5 eingelegt, um daraufhin außen um diese herum die weiteren Filterelemente einfacher Gebrauchslänge anzuordnen und anschließend die jeweiligen Tabakstöcke ganz außen anzuordnen.

Die derart zusammengestellten Tabakstock-/ Filterelemente-/Tabakstock-Gruppen bzw. Zigarette-Filter-Zigarette-Gruppen werden dann einer Obergabetrommel 21 zugeführt. An dieser Stelle werden dann die ersten Messungen durchgeführt. Hierzu dient die erste Meßstelle 41, die in einer Auflichttechnik bzw. in Reflektion mißt, ob die Filterbestandteile vollzählig sind, ob die Position der Filterbestandteile korrekt ist, ob die Länge der einzelnen Bestandteile korrekt ist und ggf. ob Dichteabweichungen einzelner Filterbestandteile feststellbar sind. Eine genauere Beschreibung wird im folgenden nach der Beschreibung der Filteransetzmaschine 1 gegeben.

Die entsprechend zusammengestellten Tabakstock-Filterelemente-Tabakstock-Gruppen werden dann einer Zuführtrommel 22 übergeben, um in einer Ausrichttrommel 23 zusammengeschoben zu werden. Ein von einer Belagpapierbobine 50 bzw. 51 abgezogener Belagpapierstreifen 52 wird von einer Beleimvorrichtung beleimt und dann in einer Schneidvorrichtung 53 auf einer Schneidtrommel 54 von den Messern einer Messertrommel 53 in Belagblättchen zerschnitten. Die abgetrennten Belagblättchen werden an die Zigarette-Filter-Zigarette-Gruppen auf der Ausrichttrommel 23 angeheftet und auf einer Rolltrommel 24 um die Zigaretten-Filter-Zigarette-Gruppen herumgerollt. Hierzu dient eine Rollhand 27 und ein entsprechend daran anschließendes Beschleunigungselement 26 in bekannter Weise.

Die fertigen Doppelfilterzigaretten werden über eine Obergabetrommel 28 bzw. eine Trockentrommel 28 einer Schneidtrommel 29 zugeführt und auf dieser durch mittiges Schneiden durch die Filterstopfen hindurch zu Einzelfilterzigaretten konfektioniert. Die Einzelfilterzigaretten werden dann einer Obergabetrommel 31 übergeben. An dieser Obergabetrommel 31 bzw. in dieser Obergabetrommel 31 ist eine weitere Meßeinrichtung 42 vorgesehen, die in einem Auflichtverfahren feststellt; ob die Belagpapierkante an der richtigen Position ist und ob der Belagpapieraufdruck korrekt ausgeführt ist. Bezüglich dieser durchzuführenden Messungen wird auch auf das nachstehend Beschriebene verwiesen.

Anschließend wendet eine Wendetrommel 32 eine Filterzigarettenreihe und überfuhrt sie gleichzeitig in die durchlaufende ungewendete Filterzigarettenreihe. Über eine Prüftrommel 33, die bspw. in der DE 35 17 155 C2, die der US 4 662 214 entspricht, beschrieben ist, gelangen die Filterzigaretten zu einer Auswurftrommel 34. An dieser Auswurftrommel 34 bzw. wenigstens teilweise in dieser Auswurftrommel 34 befindet sich eine dritte Meßeinrichtung 43, bei der mittels eines Durchstrahlverfahrens festgestellt wird, ob Lücken zwischen den Filterbestandteilen existieren oder Filterbestandteile fehlen. Ferner ist es möglich, an dieser Stelle auch Dichteabweichungen einzelner Filterbestandteile zu messen. Auch auf diese Meßeinrichtung wird im folgenden näher eingegangen.

Anschließend gelangen die Filterzigaretten in eine Übergabetrommel 36 und eine Ausblastrommel 37, in der mittels einer Entnahmetrommel 38 stichprobenartig Zigaretten entnommen werden können. Die nicht entnommenen Filterzigaretten gelangen zu einer Ablegertrommel 39, die in bekannter Weise die Filterzigaretten auf ein Ablegerband ablegt, um einen Massenstrom von Filterzigaretten zu erzeugen. Das Erzeugen eines Massenstroms und eine entsprechende Einrichtung diesbezüglich ist bspw. in der EP 0 692 201 81 beschrieben.

In Fig. 2 ist schematisch in einer Querschnittsdarstellung ein Teil einer Tabakstock-Filterelemente-Tabakstock-Gruppe dargestellt. An den links angeordneten Tabakstock 60 schließt sich ein erstes Filterelement 61 an, ein zweites Filterelement 62, ein drittes Filterelement 63, ein viertes Filterelement 64, das mittig, wie durch die gestrichelten Linien angedeutet ist, zerteilt werden soll. Es schließt sich daran ein drittes Filterelement 63, ein zweites Filterelement 62, ein erstes Filterelement 61 und erneut ein Tabakstock 60 an. Es ist ferner auch schematisch ein Belagpapierwickel 65 dargestellt.

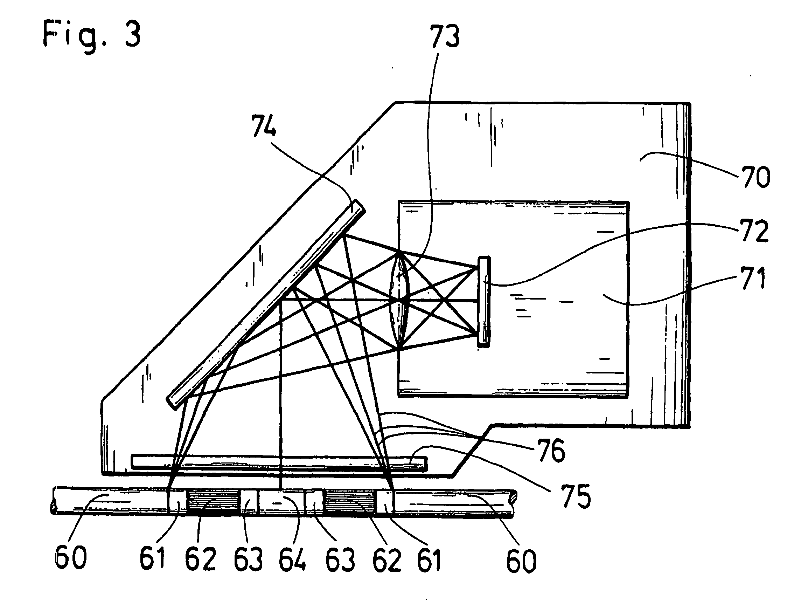

In Fig. 3 ist schematisch in einer Seitenansicht eine Meßeinrichtung dargestellt, die in einer Auflichttechnik Messungen durchführbar macht. Es handelt sich hierbei um eine erfindungsgemäße erste Meßeinrichtung bzw. um eine erfindungsgemäße dritte Meßeinrichtung. In diesem Ausführungsbeispiel der Fig. 3 wird eine Zigarette-Filter-Zigarette-Gruppe ausgemessen und zwar in einer Auflichttechnik. Es ist ein Ausführungsbeispiel mit einem abgewinkelten Strahlengang dargestellt, wobei zum Abwinkeln des Strahlengangs ein Spiegel 74 dient. Es wird Licht durch eine lichtquelle, die in Fig. 3 nicht dargestellt ist, gleichförmig auf die Zigarette-Filter-Zigarette-Gruppe gestrahlt. Es muß diesbezüglich, wie in Fig. 3 dargestellt ist, allerdings nur ein Abschnitt der Gruppe bestrahlt werden. Hierbei ist insbesondere an den Abschnitt zu denken, der die Filterbestandteile umfaßt. In diesem Ausführungsbeispiel ist noch kein Belagpapierstreifen um die Zigarette-Filter-Zigarette-Gruppe gewickelt worden. Das von den Bestandteilen der Zigarette-Filter-Zigarette-Gruppe reflektierte Licht wird über eine Linse 75 einem Spiegel 74 gebündelt zugeführt, um dann mittels einer Sammellinse 73 auf einen zeilenempfindlichen Detektor wie bspw. eine CCD-Zeile 72 gesammelt zu werden. Die in Fig. 3 dargestellte Kamera 71 ist in einem Gehäuse 70, zusammen mit dem Spiegel 74 und der Linse 75 untergebracht und umfaßt eine Sammellinse 73 und die CCD-Zeile 72. Es sind ferner die typischen Strahlengänge 76 dargestellt.

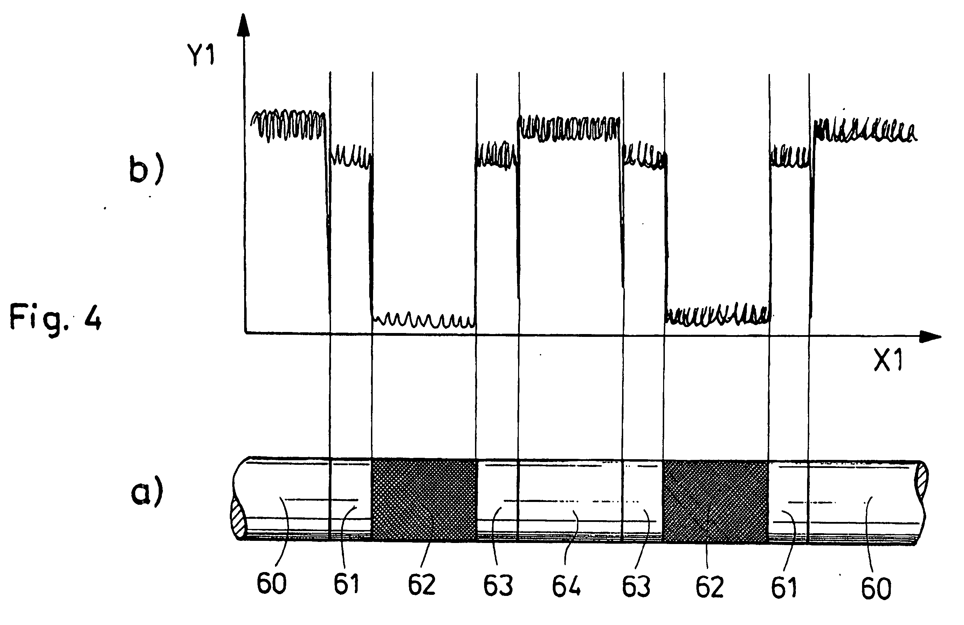

Ein Meßergebnis, das als beispielhaft anzusehen ist, ist in Fig. 4b) dargestellt. Dieses Meßergebnis wird bspw. mit einer Zigarette-Filter-Zigarette-Gruppe erzeugt, die in Fig. 4a) dargestellt ist. Die Ordinate Y1 stellt die Pixelintensität der CCD-Zeile 72 bzw. der Zeilenkamera 71 dar und die Abszisse X1 die Zahl der Pixelelemente. Es ist klar zu erkennen, daß von der Zigarette 60 und dem mittleren Filterelement 64 relativ viel Licht reflektiert wird, wohingegen die dunklen Filterelemente 62 relativ wenig Licht reflektieren. Die Zwischenräume zwischen den Filterelementen 61, 62, 63 und 64 bzw. zwischen dem jeweiligen Filterelement 61 und den Zigarettenstöcken 60 sind durch Intensitätsminima, die relativ scharf sind, gekennzeichnet. Wenn ein Filterbestandteil fehlt, ist mit so gut wie gar keinem reflektierten Licht zu rechnen. Aufgrund der Signalvariationen, die an Übergangsstellen der Filterelemente existieren, kann der genaue Ort der jeweiligen Übergänge bestimmt werden. Damit läßt sich auch die Länge der einzelnen Bestandteile bestimmen. Es lassen sich auch Dichteabweich.ungen feststellen, sofern vorgebbar ist, wie hoch der Reflektionsgrad von entsprechenden Filterelementen sein muß und zwar bei einer entsprechenden Dichte. Bei Abweichungen ändert sich der Reflektionsgrad.

Eine entsprechende Meßeinrichtung gem. der Fig. 3 findet auch Anwendung an einer dritten MeBstelle und zwar entweder direkt hinter der Umwickelung mit Belagpapier oder nach dem Zerteilen der Zigarette-Filter-Zigarette-Gruppen. Durch eine derartige weitere Meßeinrichtung 42 ist es möglich, die Position der Belagpapierkante zu messen, wobei ein schräger Lichteinfall mit gleichmä-Biger Beleuchtung derart zu wählen ist, daß an der Kante ein Schattenwurf entsteht, so daß mit der Zeilenkamera 71 ein entsprechender Kontrast erkannt werden kann. Ferner ist die Position des Belagpapieraufdrucks gut festzustellen. Die Position des Belagpapieraufdrucks bedeutet nämlich ein Kontrast auf der Oberfläche, der entsprechend mit der Zeilentechnik auf einfache Weise in ein entsprechendes Positionssignal gewandelt werden kann.

Die Meßeinrichtungen in Auflichttechnik können auch mittels eines geraden Strahlengangs ausgeführt sein. Ein derartiger gerader Strahlengang kann bei gewissen räumlichen Gegebenheiten vorteilhaft sein. Eine Beleuchtung kann dann bspw. von einer oder mehreren Seiten gleichmäßig geschehen.

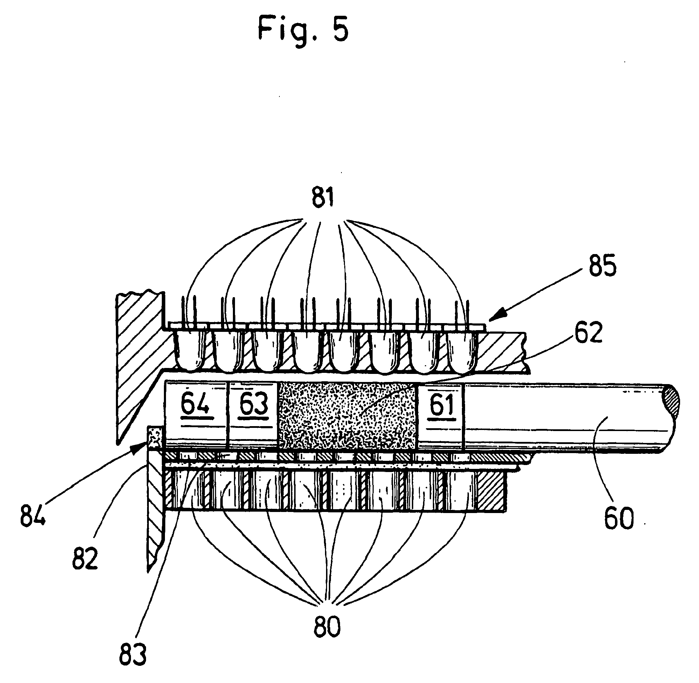

Fig. 5 zeigt in einer schematischen Querschnittsdarstellung eine weitere Meßeinrichtung, wobei es sich hierbei um die zweite Meßeinrichtung 43 handelt. Die Meßeinrichtung 43 gem. der Fig. 5 arbeitet in einer Durchlichttechnik. Die Filterzigarette ist in einer Aufnahme 84 eines Trommelkörpers 82 eingebracht. In dem Trommelkörper 82 sind Photodioden 80 angeordnet, auf die Licht durch Öffnungen 83 in den Trommelkörper 82 fallen kann. In dem Meßbereich sind, wie in Fig. 5 dargestellt ist, die Filterbestandteile 61 bis 64 angeordnet. Eine Beleuchtung geschieht in diesem Ausführungsbeispiel mittels einer Mehrzahl von Leuchtdioden 81, die von einer Beleuchtungsvorrichtung 85 umfaßt sind.

Durch die erfindungsgemäße Meßtechnik bzw. dieses Meßprinzip lassen sich gravierende Abweichungen der Dichte der Filterbestandteile erfassen und Lücken zwischen Filterbestandteilen sowie fehlende Filterbestandteile. Aufgrund dessen, daß im Durchlichtverfahren keine feine Ortsauflösung der inneren Konturen eines Filters möglich ist, ist es an dieser Stelle nicht notwendig, eine hochauflösende Zeilenkameratechnik zu verwenden, die zudem auch kostenintensiver ist.

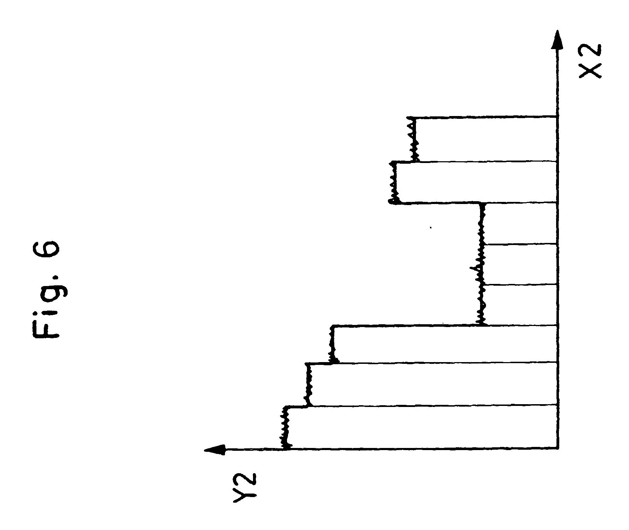

Fig. 6 zeigt ein typisches Meßsignal einer Meßeinrichtung gem. Fig. 5, wobei auf der Ordinate Y2 die Intensität angegeben ist und auf der Abszisse X2 die Anzahl der Photodioden. Aufgrund der nicht sehr hohen Ortsauflösung, die benötigt wird, wird eine Messung mit einem Array bzw. einer Gruppe von Leuchtdioden und Photodioden durchgeführt. Die Wellenlänge des Lichtes kann hierbei im sichtbaren oder infraroten Bereich liegen. Gemessen wird jeweils das Licht, das durch die unterschiedlichen Filterbereiche durchtritt. In einer Ausgestaltung gem. der Fig. 5 befindet sich die Meßstrecke zwischen Trommelinnerem und oberhalb der Zigarette. Vorzugsweise ist die Beleuchtung dabei außerhalb der Trommel und die Empfängerseite innerhalb der Trommel angeordnet, wodurch die Fremdlichteinwirkung auf ein Minimum reduzierbar ist.

Ein Verfahren zur Qualitätssicherung von Filterzigaretten mit Multisegmentfiltern sieht vor in einer ersten Meßeinrichtung mittels eines Reflektionsverfahrens, die von den Filterbestandteilen der Multisegmentfilter reflektierte Strahlung mit ersten Sollwerten zu vergleichen, wobei bei einer über einem ersten Toleranzbereich hinausgehenden Abweichung die Filterzigarette oder die Bestandteile der Filterzigarette ausgeworfen bzw. von der Weiterverarbeiturig ausgeschlossen werden. Eine Erhöhung der Meßgenauigkeit ist dann gegeben, wenn in einer zweiten Meßeinrichtung mittels eines Durchstrahlverfahrens die von den Filterbestandteilen der Multisegmentfilter und einem sich um diesen sich befindenden Belagpapier hindurchgelassenen Strahlung mit zweiten Sollwerten verglichen wird, wobei bei einer über einen zweiten vorgebbaren Toleranzbereich hinausgehenden Abweichung die Filterzigarette ausgeworfen wird. Durch die Kombination dieser beiden Verfahren ist eine sehr genaue Analyse möglich, ob die gewünschten Filterbestandteile vorhanden sind und ob diese an den richtigen Orten liegen. Hierdurch minimieren sich die Fehler bei diesen Messungen auf ein Minimum. Wenn zudem in einer dritten Meßeinrichtung mittels eines Reflektionsverfahren-s die von einem Belagpapier, das um die Multisegmentfilter herumgewickelt ist, reflektierte Strahlung mit dritten Sollwerten verglichen wird, wobei bei einer über einen dritten vorgebbaren Toleranzbereich hinausgehenden Abweichung die Filterzigarette ausgeworfen wird, können auch falsch angeordnete Belagpapierstreifen bzw. falsch angeordnete Aufdrucke auf dem Belagpapierstreifen gemessen werden.

### Bezugszeichenliste

- 1: Filteransetzmaschine
- 2: Obergabetrommel
- 3: Tabakstockschneidtrommel
- 4: Spreiztrommel
- 5: Zuführtrommel
- 6: Schneidtrommel
- 7: Staffeltrommel
- 8: Schiebe- und Schneidtrommel
- 10: Kreismesser
- 11: Schiebetrommel
- 12: Beschleunigertrommel
- 13: Beschleunigertrommel
- 15: Schneidtrommel
- 16: Staffeltrommel
- 17: Schiebe- und Schneidtrommel
- 18: Staffeltrommel
- 19: Schiebetrommel
- 21: Übergabetrommel
- 22: Zuführtrommel
- 23: Ausrichttrommel
- 24: Rolltrommel
- 26: Beschleunigungselement
- 27: Rollhand
- 28: Obergabetrommel
- 29: Schneidtrommel
- 31: Obergabetrommel
- 32: Wendetrommel
- 33: Prüftrommel
- 34: Auswurftrommel
- 36: Übergabetrommel
- 37: Ausblastrommel
- 38: Entnahmetrommel
- 39: Ablegertrommel
- 41: 1. Meßstelle
- 42: 2. Meßstelle
- 43: 3. Meßstelle
- 50: Bobine
- 51: Bobine
- 52: Belagpapier
- 53: Belagpapierschneider
- 54: Belagpapiertrommel
- 60: Tabakstock
- 61: 1. Filterelement
- 62: 2. Filterelement
- 63: 3. Filterelement
- 64: 4. Filterelement
- 65: Belagpapierwickel
- 70: Gehäuse
- 71: Kamera
- 72: CCD-Zeile
- 73: Sammellinse
- 74: Spiegel
- 75: Linse
- 76: Strahlengang
- 80: Photodiode
- 81: Leuchtdiode
- 82: Trommelkörper
- 83: Öffnung
- 84: Aufnahmemulde
- 85: Beleuchtungsvorrichtung
- X1: Anzahl Pixelelemente
- Y1: Pixelintensität
- X2: Anzahl Photodiode
- Y2: Intensität

## Patentansprüche

1. Einrichtung zum Messen von Eigenschaften von Muitisegmentflltem (61 bis 64) der Tabak verarbeitenden Industrie im Durchstrahlverfahren, wobei eine Beleuchtungsvorrichtung (85) und ein Strahlungsempfänger (80, 82) vorgesehen sind, wobei mittels der Beleuchtungsvorrichtung (85) eine im wesentlichen längsaxial gleichmäßige Bestrahlung eines Multisegmentfilters (61 bis 64) ermöglicht ist, **dadurch gekennzeichnet, dass** der Strahlungsempfänger (80, 82) innerhalb eines Förderelements (21, 31, 34), das zum Fördem wenigstens von Muttisegmentfittom (61 bis 64) vorgesehen ist, angeordnet ist.

2. Messeinrichtung nach Anspruch 1, **dadurch gekennzeichnet, dass** als Beleuchtungsvorrichtung (85) eine längsaxial zu einer in dem Förderelement (21, 31, 34) angeordneten Aufnahme angeordnete Mehrzahl von Strahlungsquellen (81) vorgesehen ist.

3. Messeinrichtung nach Anspruch 2, **dadurch gekennzeichnet, dass** die Strahlungsquellen (81) Leuchtdioden sind.

4. Messeinrichtung nach einem oder mehreren der Ansprüche 1 bis 3, **dadurch gekennzeichnet, dass** als Strahlungsempfänger (72, 80) wenigstens ein zu einer In insbesondere dem Förderelement (21, 31, 34) angeordneten Aufnahme längsaxial ausgedehntes Empfangselement (72) oder eine zu einer In dem Förderelement (21, 31, 34) angeordneten Aufnahme längsaxial angeordnete Mehrzahl von Empfangselementen (80) vorgesehen ist.

5. Messeinrichtung nach Anspruch 4, **dadurch gekennzelchnet, dass** die Empfangselemente (80) Fotodioden umfassen.

6. System zum Messen von Eigenschaften von stabförmigen Artikeln oder von Bestandteilen von stabförmigen Artikeln der Tabak verarbeitenden Industrie, die nachfolgend zu einem stabförmigen Artikel zusammenfügbar sind, Insbesondere von Multlsegmentfittem (61 bis 64) und/oder von mit Multisegmentfiltern (61 bis 64) versehenen Filterzigaretten, wobei eine erste Messeinrichtung (41) vorgesehen ist, mittels der die Artikel oder Bestandteile der Artikel mit einem Reflektionsverfahren messbar sind, **dadurch gekennzeichnet, dass** eine zweite Messeinrichtung (43) vorgesehen ist, mittels der die Artikel oder Bestandteile der Artikel In einem Durchstrahlverfahren messbar sind.

7. Messsystem nach Anspruch 6, **dadurch gekennzeichnet, dass** die zweite Messeinrichtung (43) eine Messeinrichtung nach einem oder mehreren der Ansprüche 1 bis 5 ist.

8. Messsystem nach Anspruch 6 oder 7, **dadurch gekennzeichnet, dass** eine dritte Messeinrichtung (42) vorgesehen ist, mittels der die Artikel oder Bestandteile der Artikel mit einem Reflektionsverfthren messbar sind.

9. Messsystem nach einem oder mehreren der Ansprüche 6 bis 8, **dadurch gekennzeichnet, dass** die Messeinrichtungen (41 bis 43) In und/oder an einer Fifferansetzmaschine (1) angeordnet sind.

10. Messsystem nach Anspruch 9, **dadurch gekennzeichnet, dass** die erste Messeinrichtung (41) in einem Bereich angeordnet ist, der in einem Produktionsprozess der stabförmigen Artikel stromabwärts einer die Bestandteile (60 bis 64) der Artikel zusammenstellenden Station (5) liegt.

11. Messsystem nach Anspruch 10, **dadurch gekennzeichnet, dass** die erste Messeinrichtung (41) an und/oder in einer stromabwärts einer die Bestandteile zusammenstellenden ersten Trommel (5) angeordneten Obergabetrommel (21) angeordnet ist.

12. Messsystem nach einem oder mehreren der Ansprüche 9 bis 11, **dadurch gekennzeichnet, dass** die zweite und/oder dritte Messeinrichtung (42, 43) In einem Bereich angeordnet Ist, der in einem Produktionsprozess der stabförmigen Artikel stromabwärts einer Station (23. 24) zum wenigstens teilweise Umhüllen der Artikel (60 bis 64) mit einem Belagpapier (52) liegt.

13. Messsystem nach einem oder mehreren der Ansprüche 10 bis 12, **dadurch gekennzeichnet, dass** die Station wenigstens teilweise Trommeln umfasst.

14. Messsystem nach einem oder mehreren der Ansprüche 6 bis 13, **dadurch gekennzeichnet, dass** die erste und/oder dritte Messeinrichtung (41, 43) eine Beleuchtungsvorrichtung (85) umfasst, mittels der die stabförmigen Artikel oder Bestandteile (60 bis 64) von stabförmigen Artikeln im wesentlichen in einem Messbereich bestrahlbar sind, und dass die erste und/oder dritte Messeinrichtung (41, 43) einen Strahlungsempfänger (72) umfasst, der die von den Artikein (60 bis 64) oder den Bestandteilen (60 bis 64, 52) reflektierte Strahlung empfängt.

15. Messsystem nach Anspruch 14, **dadurch gekennzeichnet, dass** der Strahlungsempfänger (72, 80) mehrere Empfänger (80) umfasst, die In einer Reihe angeordnet sind.

16. Messsystem nach Anspruch 14, **dadurch gekennzeichnet, dass** der Strahiungsempfänger (72, 80) ein In wenigstens einer Richtung ausgedehnter posibunssensittver Empfänger ist, und insbesondere ein CCD umfasst.

17. Filteransetzmaschine (1) mit wenigstens einer Messeinrichtung nach einem oder mehreren der Ansprüche 1 bis 5 und/oder einem Messsystem nach einem oder mehreren der Ansprüche 6 bis 16.

18. Verfahren zur Qualitätssicherung von Filterzigaretten mit Multisegmentfiltern (61 bis 64), wobei In einer ersten Messeinrichtung (41) mittels eines Reflektionsverfahrens die von den Filterbestandtellen (61 bis 64) der Multisegmentfilter reflektierte Strahlung mit ersten Sollwerten verglichen wird, wobei bei einer über einen ersten vorgebbaren Toleranzbereich hinausgehenden Abweichung die Filter-zigarette oder die Bestandteile (60 bis 64) der Filterzigarette ausgeworfen werden, wobei in einer zweiten Messeinrichtung (43) mittels eines Durchstrahlverfahrens die von den Filterbestandtellen und einem sich um diesen sich befindenden Belagpapier (52) hindurchgelassene Strahlung mit zweiten Sollwerten verglichen wird, wobei bei einer über einen zweiten vorgebbaren Toleranzbereich hinausgehenden Abweichung die Filterzigarette ausgeworfen wird.

19. Verfahren nach Anspruch 18, **dadurch gekennzeichnet, dass** in einer dritten Messeinrichtung (42) mittels eines Reflektionsverfahrens die von einem Belagpapier (52), das um die Multisegmentfilter (61 bis 64) herumgewickelt ist, reflektierte Strahlung mit dritten Sollwerten verglichen wird, wobei bei einer über einen dritten vorgebbaren Toleranzbereich hinausgehenden Abweichung die Filterzigarette ausgeworfen wird.

## Claims

1. Device for measuring properties of multi-segment filters (61 to 64) of the tobacco-processing industry using a transmission technique, wherein an illuminating device (85) and a radiation receptor (80, 82) are provided, wherein by means of the illuminating device (85) a multi-segment filter (61 to 64) may be irradiated substantially uniformly in the direction of its longitudinal axis, **characterized in that** the radiation receptor (80, 82) is disposed inside a conveying element, (21, 31, 34) that is provided for conveying at least multi-segment filters (61 to 64).

2. Measuring device according to claim 1, **characterized in that** a plurality of radiation sources (81) disposed in the direction of the longitudinal axis of a receiver disposed in the conveying element (21, 31, 34) is provided as illuminating device (85).

3. Measuring device according to claim 2, **characterized in that** the radiation sources (81) are light emitting diodes.

4. Measuring device according to one or more of claims 1 to 3, **characterized in that** as a radiation receptor (72, 80) at least one receptor element (72), which extends in the direction of the longitudinal axis of a receiver disposed in the conveying element (21, 31, 34) in particular, or a plurality of receptor elements (80), which are disposed in the direction of the longitudinal axis of a receiver disposed in the conveying element (21, 31, 34), is provided.

5. Measuring device according to claim 4, **characterized in that** the receptor elements (80) comprise photodiodes.

6. System for measuring properties of rod-shaped articles or of components of rod-shaped articles of the tobacco-processing industry that are subsequently combinable into a rod-shaped article, in particular of multi-segment filters (61 to 64) and/or of filter cigarettes provided with multi-segment filters (61 to 64), wherein a first measuring device (41) is provided, by means of which the articles or components of the articles are measurable using a reflection technique, **characterized in that** a second measuring device (43) is provided, by means of which the articles or components of the articles are measurable using a transmission technique.

7. Measuring system according to claim 6, **characterized in that** the second measuring device (43) is a measuring device according to one or more of claims 1 to 5.

8. Measuring system according to claim 6 or 7, **characterized in that** a third measuring device (42) is provided, by means of which the articles or components of the articles are measurable using a reflection technique.

9. Measuring system according to one or more of claims 6 to 8, **characterized in that** the measuring devices (41 to 43) are disposed in and/or on a filter attachment machine (1).

10. Measuring system according to claim 9, **characterized in that** the first measuring device (41) is disposed in a region lying, in a production process of the rod-shaped articles, downstream of a station (5) that assembles the components (60 to 64) of the articles.

11. Measuring system according to claim 10, **characterized in that** the first measuring device (41) is disposed on and/or in a delivery drum (21), which is disposed downstream of a first drum (5) that assembles the components.

12. Measuring system according to one or more of claims 9 to 11, **characterized in that** the second and/or third measuring device (42, 43) is disposed in a region lying, in a production process of the rod-shaped articles, downstream of a station (23, 24) for at least partially wrapping the articles (60 to 64) in a cover paper (52).

13. Measuring system according to one or more of claims 10 to 12, **characterized in that** the station at least partially comprises drums.

14. Measuring system according to one or more of claims 6 to 13, **characterized in that** the first and/or third measuring device (41, 43) comprises an illuminating device (85), by means of which the rod-shaped articles or components (60 to 64) of rod-shaped articles may be irradiated substantially in a measuring region, and that the first and/or third measuring device (41, 43) comprises a radiation receptor (72), which receives the radiation reflected by the articles (60 to 64) or the components (60 to 64, 52).

15. Measuring system according to claim 14, **characterized in that** the radiation receptor (72, 80) comprises a plurality of receptors (80), which are disposed in a row.

16. Measuring system according to claim 14, **characterized in that** the radiation receptor (72, 80) is a position-sensitive receptor, which extends in at least one direction, and in particular comprises a CCD.

17. Filter attachment machine (1) having at least one measuring device according to one or more of claims 1 to 5 and/or a measuring system according to one or more of claims 6 to 16.

18. Method of assuring the quality of filter cigarettes having multi-segment filters (61 to 64), wherein in a first measuring device (41) by means of a reflection technique the radiation reflected by the filter components (61 to 64) of the multi-segment filters is compared with first setpoint values, wherein in the event of a variation beyond a first definable tolerance range the filter cigarette or the components (60 to 64) of the filter cigarette are ejected, wherein in a second measuring device (43) by means of a transmission technique the radiation, which is transmitted by the filter components of the multi-segment filters and a cover paper (52) situated around these, is compared with second setpoint values, wherein in the event of a variation beyond a second definable tolerance range the filter cigarette is ejected.

19. Method according to claim 18, **characterized in that** in a third measuring device (42) by means of a reflection technique the radiation reflected by a cover paper (52) wrapped around the multi-segment filter (61 to 64) is compared with third setpoint values, wherein in the event of a variation beyond a third definable tolerance range the filter cigarette is ejected.

## Revendications

1. Dispositif pour la mesure de caractéristiques de filtres multisegments (61 à 64) de l'industrie de transformation du tabac selon le procédé par transmission de rayonnement, dans lequel sont prévus un appareil d'éclairage (85) et un récepteur de rayonnement (80, 82), une émission de rayonnement sur un filtre multisegment (61 à 64), sensiblement uniforme le long de son axe, étant alors rendue possible au moyen de l'appareil d'éclairage (85), **caractérisé en ce que** le récepteur de rayonnement (80, 82) est disposé à l'intérieur d'un organe de transport (21, 31, 34), qui est prévu pour transporter au moins des filtres multisegments (61 à 64).

2. Dispositif de mesure selon la revendication 1, **caractérisé en ce qu'**il y est prévu comme appareil d'éclairage (85), une multiplicité de sources de rayonnement (81) disposée suivant la direction axiale par rapport à un logement situé dans l'organe de transport (21, 31, 34).

3. Dispositif de mesure selon la revendication 2, **caractérisé en ce que** les sources de rayonnement (81) sont des diodes électroluminescentes.

4. Dispositif de mesure selon une ou plusieurs des revendications 1 à 3, **caractérisé en ce qu'**il y est prévu comme récepteur de rayonnement (72, 80), au moins un organe de réception (72) étendu suivant la direction axiale par rapport à un logement situé en particulier dans l'organe de transport (21, 31, 34) ou une multiplicité d'organes de réception (80) disposée suivant la direction axiale par rapport à un logement situé dans l'organe de transport (21, 31, 34).

5. Dispositif de mesure selon la revendication 4, **caractérisé en ce que** les organes de réception (80) comprennent des photodiodes.

6. Système pour la mesure de caractéristiques d'articles en forme de tige ou d'éléments constitutifs d'articles en forme de tige de l'industrie de transformation du tabac, qui peuvent par la suite être réunis en un article en forme de tige, en particulier de filtres multisegments (61 à 64) et/ou de cigarettes à filtre munies de filtres multisegments (61 à 64), système dans lequel est prévu un premier dispositif de mesure (41), au moyen duquel les articles ou les éléments constitutifs des articles peuvent faire l'objet de mesures à l'aide d'un procédé par réflexion, **caractérisé en ce qu'**il est prévu un deuxième dispositif de mesure (43), au moyen duquel les articles ou les éléments constitutifs des articles peuvent faire l'objet de mesures selon un procédé par transmission de rayonnement.

7. Système de mesure selon la revendication 6, **caractérisé en ce que** le deuxième dispositif de mesure (43) est un dispositif de mesure selon une ou plusieurs des revendications 1 à 5.

8. Système de mesure selon la revendication 6 ou 7, **caractérisé en ce qu'**il est prévu un troisième dispositif de mesure (42), au moyen duquel les articles ou les éléments constitutifs des articles peuvent faire l'objet de mesures à l'aide d'un procédé par réflexion.

9. Système de mesure selon une ou plusieurs des revendications 6 à 8, **caractérisé en ce que** les dispositifs de mesure (41 à 43) sont disposés dans et/ou sur une machine de pose de filtres (1).

10. Système de mesure selon la revendication 9, **caractérisé en ce que** le premier dispositif de mesure (41) est disposé dans une région qui, dans un processus de production des articles en forme de tige, se trouve placée en aval d'un poste (5) assemblant les éléments constitutifs (60 à 64) des articles.

11. Système de mesure selon la revendication 10, **caractérisé en ce que** le premier dispositif de mesure (41) est disposé sur et/ou dans un tambour de transfert (21) situé en aval d'un premier tambour (5) assemblant les éléments constitutifs.

12. Système de mesure selon une ou plusieurs des revendications 9 à 11, **caractérisé en ce que** le deuxième et/ou le troisième dispositif de mesure (42, 43) est disposé dans une région qui, dans un processus de production des articles en forme de tige, se trouve placée en aval d'un poste (23, 24) pour l'enveloppement, au moins partiel, des articles (60 à 64) avec un papier de revêtement (52).

13. Système de mesure selon une ou plusieurs des revendications 10 à 12, **caractérisé en ce que** le poste comprend au moins en partie des tambours.

14. Système de mesure selon une ou plusieurs des revendications 6 à 13, **caractérisé en ce que** le premier et/ou le troisième dispositif de mesure (41, 43) comprend un appareil d'éclairage (85), au moyen duquel un rayonnement peut être émis sur les articles en forme de tige ou les éléments constitutifs (60 à 64) d'articles en forme de tige, essentiellement dans une région de mesure, et **en ce que** le premier et/ou le troisième dispositif de mesure (41, 43) comprend un récepteur de rayonnement (72), qui reçoit le rayonnement réfléchi par les articles (60 à 64) ou les éléments constitutifs (60 à 64, 52).

15. Système de mesure selon la revendication 14, **caractérisé en ce que** le récepteur de rayonnement (72, 80) comprend plusieurs récepteurs (80), qui sont disposés en une rangée.

16. Système de mesure selon la revendication 14, **caractérisé en ce que** le récepteur de rayonnement (72, 80) est un récepteur sensible en position étendu dans au moins une direction, et comprend en particulier un CCD.

17. Machine de pose de filtres (1) comportant au moins un dispositif de mesure selon une ou plusieurs des revendications 1 à 5 et/ou un système de mesure selon une ou plusieurs des revendications 6 à 16.

18. Procédé d'assurance de la qualité de cigarettes à filtre comportant des filtres multisegments (61 à 64), selon lequel dans un premier dispositif de mesure (41) au moyen d'un procédé par réflexion, le rayonnement réfléchi par les éléments constitutifs de filtre (61 à 64) des filtres multisegments est comparé à des premières valeurs de consigne et, dans le cas d'un écart sortant d'une première plage de tolérance prédéfinissable, la cigarette à filtre ou les éléments constitutifs (60 à 64) de la cigarette à filtre sont rejetés, et selon lequel dans un deuxième dispositif de mesure (43) au moyen d'un procédé par transmission de rayonnement, le rayonnement transmis par les éléments constitutifs du filtre et un papier de revêtement (52) se trouvant autour de ce dernier, est comparé à des deuxièmes valeurs de consigne et, dans le cas d'un écart sortant d'une deuxième plage de tolérance prédéfinissable, la cigarette à filtre est rejetée.

19. Procédé selon la revendication 18, **caractérisé en ce que**, dans un troisième dispositif de mesure (42) au moyen d'un procédé de réflexion, le rayonnement réfléchi par un papier de revêtement (52), qui est enroulé autour des filtres multisegments (61 à 64), est comparé à des troisièmes valeurs de consigne et, dans le cas d'un écart sortant d'une troisième plage de tolérance prédéfinissable, la cigarette à filtre est rejetée.
